(19) Europäisches Patentamt
European Patent Office
Office européen des brevets

(11) EP 1 081 877 B1

(12) EUROPEAN PATENT SPECIFICATION

(45) Date of publication and mention of the grant of the patent:
**11.03.2009 Bulletin 2009/11**

(51) Int Cl.:
***H04B 7/005*** *(2006.01)*

(21) Application number: **99117520.9**

(22) Date of filing: **04.09.1999**

(54) **Mobile station and method for setting output power during frequency redefinition between bands**

Mobilstation und Verfahren zur Einstellung der Ausgangsleistung während der Frequenzwiederdefinierung zwischen den Bändern

Station mobile et procédé d' établissement de la puissance d' émission durant la redéfinition de la fréquence inter-bandes

(84) Designated Contracting States:
**DE DK FR GB IT SE**

(43) Date of publication of application:
**07.03.2001 Bulletin 2001/10**

(73) Proprietor: **Cinterion Wireless Modules GmbH**
**81669 München (DE)**

(72) Inventors:
- **Jepsen, Bent**
  **9700 Bronderslev (DK)**
- **Midtgaard, Erik**
  **9530 Stovring (DK)**

(74) Representative: **Eisenführ, Speiser & Partner**
**Patentanwälte Rechtsanwälte**
**Spreepalais am Dom**
**Anna-Louisa-Karsch-Strasse 2**
**10178 Berlin (DE)**

(56) References cited:
**EP-A- 0 926 838**
**US-A- 5 546 384**
**US-A- 5 926 751**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 081 877 B1

## Description

Related Technology

The present invention relates to mobile communication systems in general, and, more specifically, to a mobile station capable of setting its output power during frequency redefinition between bands and a method for performing same.

Frequency redefinition is a procedure used in a mobile communications network to change frequencies and frequency hopping sequences for a mobile radio transceiver, or mobile station, in allocated radio channels. The network may direct frequency redefinition, for example, when the network frequency planning is changed or as part of an intra-cell or inter-cell handover. For example, the Global System for Mobile Communications (GSM) specifications, published by the European Telecommunications Standards Institute (ETSI), provide for a messages by which the network directs a mobile station to change its frequencies and frequency hopping sequences. See GSM specifications.

A frequency redefinition method for a cellular mobile radio system is described in the document US-A-5 546 384. In the known method, replacement of a first list of frequencies by a second list of frequencies is effected time slot by time slot.

Specifications for some mobile communications network may define numerical power control levels, each corresponding to a respective nominal output, or uplink, power of the mobile station. The power level definitions may be band-dependent.

The specifications may omit specific requirements for power control during frequency redefinition between different frequency bands. The specifications may, for example, merely require that parameters not explicitly set forth in the specification must be identical prior to and after a frequency redefinition, as is the case with the GSM Phase 2 specifications. Such specifications are thus incomplete. Maintaining the power level constant during frequency redefinition may result in the nominal output power being automatically changed. The result could be temporary loss of up-link speech or data frames. Typically it may take a network base station more than one second to correct the mobile station power.

Because some power control levels may not be defined for certain classes of mobile station, in some cases it may not even be possible for the mobile station power level parameter to be maintained constant during frequency redefinition. For example, power control level 0 is defined for DCS 1800 power class 1 mobile stations, but is not defined for GSM 900 power class 4 mobile stations. Nevertheless, this combination of power classes is common in DCS 1800 and GSM 900 dual band mobile stations.

Another potentially detrimental effect of maintaining the mobile station power control level parameter constant during frequency redefinition is a change in effective transmission due to the difference in propagation loss between two frequency bands. For example, the propagation loss has been found to be 10 dB greater in the 1800 MHz band as compared to the 900 MHz band. See Preben Mogensen et al, 1800 MHz Mobile net planning based on 900 MHz measurement, COST 231, TD91-008 Firence, January 1991.

Advantages of the Invention

In view of the problems outlined above, a procedure for proper control of the mobile station output power during frequency redefinition is needed.

The present invention provides a mobile station associated with a mobile communications network, the mobile station being capable of performing a frequency redefinition from a first frequency group in a first frequency band to a second frequency group in a second frequency band, characterized in that the mobile station is adapted to set its nominal output power upon the frequency redefinition by adding a power level correction value to the output power control level at the first frequency group so that the nominal output power at the second frequency group is equal to the nominal output power at the first frequency group.

The present invention also provides a method for performing frequency redefinition from a first frequency group in a first frequency band to a second frequency group in a second frequency band for a mobile station in a mobile communications network, characterized in that a power level correction value is determined; and the nominal output power is set upon frequency redefinition by adding the power level correction value to the output power control level at the first frequency group so that the nominal output power at the second frequency group is equal to the nominal output power at the first frequency group.

In one embodiment of the present invention the power level correction value includes a band offset value for correcting for differences in power level definitions between bands.

In another embodiment of the present invention the power level correction value includes a propagation loss difference value for correcting for the propagation loss difference between the first and second frequency bands.

The power level correction value may be: 1) sent to the mobile station by the mobile communication network (for example, as a part of a network message commanding frequency redefinition); 2) determined in the mobile station;

or 3) sent by the mobile communication network and used by the mobile station if the mobile station supports receiving such sending, and otherwise be determined in the mobile station.

The present invention may avoid a potential temporary loss of up-link speech or data frames due to an unintended change in nominal output power upon frequency redefinition. Interference in the uplink direction is reduced because approximately the same nominal output power is transmitted before and after frequency redefinition. Because the same nominal output power for transmission is maintained, the mobile station is more likely to be received with sufficient signal quality by the network after frequency redefinition. By addressing the propagation loss difference between bands, the present invention also enables relaxed base station receiver sensitivity requirements.

Drawings

Further advantages of the present invention will become apparent from the claims and the description below, based on the drawing, in which:

Fig. 1 is a schematic diagram of a mobile station according to the present invention; and

Fig. 2 is a flow chart of a method according to the present invention.

Description

The present invention will now be described with particular reference to an exemplary embodiment in the context of GSM Phase 2 multiband operations between the GSM 900 (900 MHz) and DCS 1800 (1800 MHz) bands.

The GSM Phase 2 specifications do not explicitly set forth requirements for power control during frequency redefinition. These specifications merely require that parameters not explicitly set forth in the specification must be identical prior to and after a frequency redefinition. The Phase 2 specifications are thus incomplete.

The Phase 2 specifications define numerical power control levels, each corresponding to a nominal output, or uplink, power of the mobile station. The power level definitions are band dependent and therefore described separately for each band, as shown in the following tables:

Table 1

| GSM 900 | | | |
|---|---|---|---|
| Power control level | Nominal Output power (dBm) | Tolerance (dB) for conditions | |
| | | normal | extreme |
| 0-2 | 39 | ±2 | ±2.5 |
| 3 | 37 | ±3 | ±4 |
| 4 | 35 | ±3 | ±4 |
| 5 | 33 | ±3 | ±4 |
| 6 | 31 | ±3 | ±4 |
| 7 | 29 | ±3 | ±4 |
| 8 | 27 | ±3 | ±4 |
| 9 | 25 | ±3 | ±4 |
| 10 | 23 | ±3 | ±4 |
| 11 | 21 | ±3 | ±4 |
| 12 | 19 | ±3 | ±4 |
| 13 | 17 | ±3 | ±4 |
| 14 | 15 | ±3 | ±4 |
| 15 | 13 | ±3 | ±4 |
| 16 | 11 | ±5 | ±6 |
| 17 | 9 | ±5 | ±6 |
| 18 | 7 | ±5 | ±6 |
| 19-31 | 5 | ±5 | ±6 |

Table 2

| DCS 1800 | | | |
|---|---|---|---|
| Power control level | Nominal Output power (dBm) | Tolerance (dB) for conditions normal | extreme |
| 29 | 36 | ±2 | ±2.5 |
| 30 | 34 | ±3 | ±4 |
| 31 | 32 | ±3 | ±4 |
| 0 | 30 | ±3 | ±4 |
| 1 | 28 | ±3 | ±4 |
| 2 | 26 | ±3 | ±4 |
| 3 | 24 | ±3 | ±4 |
| 4 | 22 | ±3 | ±4 |
| 5 | 20 | ±3 | ±4 |
| 6 | 18 | ±3 | ±4 |
| 7 | 16 | ±3 | ±4 |
| 8 | 14 | ±3 | ±4 |
| 9 | 12 | ±4 | ±5 |
| 10 | 10 | ±4 | ±5 |
| 11 | 8 | ±4 | ±5 |
| 12 | 6 | ±4 | ±5 |
| 13 | 4 | ±4 | ±5 |
| 14 | 2 | ±5 | ±6 |
| 15-28 | 0 | ±5 | ±6 |

As is apparent from Tables 1 and 2, the nominal output power at a given power level for GSM 900 is not equal to the nominal output power at the same power level for DCS 1800. For example, the nominal output power at power control level 5 is 33 dBm for GSM 900 and 20 dBm for DCS 1800. If the power control level parameter is maintained constant during frequency redefinition, as required by the GSM Phase 2 specifications, the nominal output power will thus be automatically changed. The result could be temporary loss of up-link speech or data frames. Typically it may take a network base station more than 1 second to correct the mobile station power.

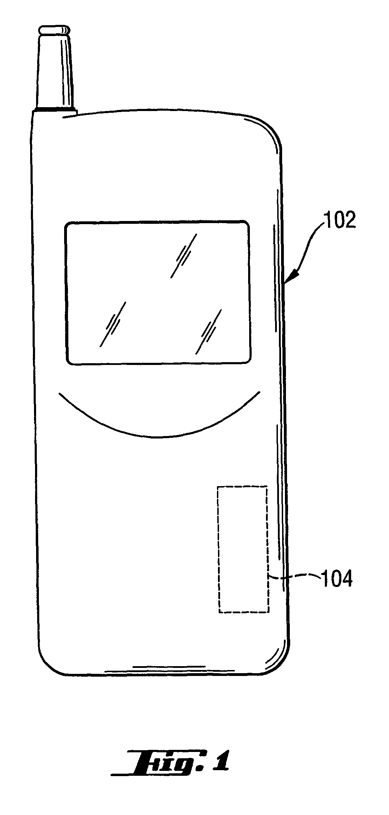

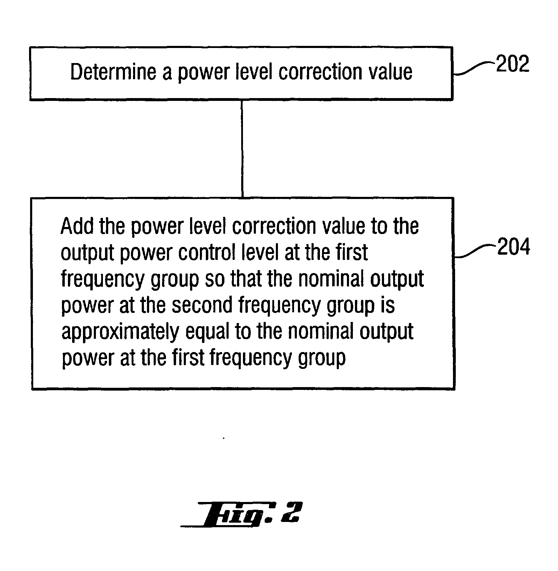

Referring to Figs. 1 and 2, to determine the new nominal output power control level for mobile station [102] (Fig. 1) at a new frequency band upon a frequency redefinition, a power level correction value is determined [202] (Fig. 2) and added to the output power control level present before the frequency redefinition so that the nominal output power at the second frequency set, or group, is approximately equal to the nominal output power at the first frequency set [204] (Fig.2). Generally, the following equation may be used:

$$MS_TXP_{BAND2} = MS_TXP_{BAND1} + PLCV \qquad [1]$$

where:

$MS_TXP_{BAND2}$ is the mobile station power control level at the new frequency band (BAND2), after frequency redefinition;

$MS_TXP_{BAND1}$ is the mobile station power control level at the old frequency band (BAND1), before frequency redefinition; and

PLCV is the power level correction value.

Depending on the system in question, equation [1] may need to be modified to account for system-specific power control level definition characteristics. For a GSM Phase 2 dual band system, for example, equation [1] may be modified to account for the characteristics of the power control level definitions in the case of GSM 900 and DCS 1800, and, particularly, for the non-monotonic nature of the power control level definitions above power control level 28 in DCS 1800. As can be seen in Table 2 above, in DCS 1800 the nominal output power decreases monotonically from 30 to 0 dBm as the power control level increases from 0 to 28. At power control level 29, however, the nominal output power jumps up to 36 dBm, then decreases to 32 dBm as the power control level increases to 31. As can be seen from both Tables 1 and 2, the maximum power control level defined for both GSM 900 and DCS 1800 is 31.

To account for these characteristics of the GSM 900 and DCS 1800 power level definitions, equation [1] may be modified as follows:

When BAND1 is DCS 1800 and BAND2 is GSM 900:

For $MS_TXP_{BAND1} > 28$:

$MS_TXP_{BAND2} = [MS_TXP_{BAND1} + PLCV] \text{ MOD } 32$

For $MS_TXP_{BAND1} \leq 28$:

$MS_TXP_{BAND2} = MS_TXP_{BAND1} + PLCV$; when $MS_TXP_{BAND2} > 31$, $MS_TXP_{BAND2} = 31$

where: MOD 32 indicates the arithmetic operator modulo 32.

When BAND1 is GSM 900 and BAND2 is DCS 1800:

$MS_TXP_{BAND2} = MS_TXP_{BAND1} + PLCV$

when $MS_TXP_{BAND2} < 0$, $MS_TXP_{BAND2} = MS_TXP_{BAND2} + 32$

when $MS_TXP_{BAND2} < 29$, $MS_TXP_{BAND2} = 29$

In all these GSM 900/DCS 1800-specific equations, $|PCLV|$ is assumed to be > 2.

In one embodiment of the present invention, the power level correction value includes a band offset value to correct for differences in power level definitions between bands. The band offset value for a frequency redefinition from DCS 1800 to GSM 900, for example, is preferably 6, or alternatively, 7. These band offset values are derived using the power control level definition of Tables 1 and 2, above. The nominal output power level offset, or difference, between GSM 1800 and DCS 1800 for a given power control level may be determined from Tables 1 and 2 to be 13 dBm. Bearing in mind that a 2 dBm output power difference exists between consecutive power control levels in each band, and that the specifications provide for control of a mobile station in whole power level increments, the band offset value may be determined by dividing 13 dBm by 2 dBm to give either 6 or 7 as the closest power control level correction value to maintain the power level approximately the same between bands.

If the calculated power control level is not supported by the mobile station or not defined, the mobile station preferably uses the supported output power control level which is closest to the calculated.

In another embodiment of the present invention, the power level correction value includes a propagation loss difference value to correct for differences in propagation loss between bands. The propagation loss difference value for a frequency redefinition from DCS 1800 to GSM 900, for example, is preferably 5. Determination of this value is similar to that of the band offset value, described above. The empirically-determined 10 dB propagation loss between DCS 1800 to GSM 900, noted above, may be divided by the 2 dB difference between consecutive power control levels in Tables 1 and 2 above, giving a propagation loss difference value of 5. As described above, if the calculated power control level is not supported by the mobile station or not defined, the mobile station uses the supported output power control level which is closest to the calculated level.

In a further embodiment of the present invention the power level correction value may include both a band offset value component and a propagation loss difference value component. It should be noted that the power loss correction value would not need to be included in the power level correction value in a network, or portion of a network, in which propagation loss differences between frequency bands are corrected for using base station receiver sensitivity variations, or the like.

In one embodiment of the present invention, the power level correction value is sent to the mobile station by the network. The power level correction value sent may have been determined, for example, in a fixed network entity such as a base station sub-system. In another embodiment of the present invention, the power level correction value is determined in the mobile station. In either case, determining the power level correction value may include reading an appropriate value residing in a respective entity, such as a memory medium, for example. In a further embodiment of the present invention, a power level correction value it is sent by the network and used by the mobile station if the mobile station supports receiving such sending, and otherwise is determined in the mobile station.

When sent by the network to the mobile station, the power level correction value is preferably contained in a message providing for frequency redefinition, in the context of, for example, call set-up, network frequency redefinition, inter-cell handover, or intra-cell handover. In order to support frequency redefinition, these messages typically carry the current frequency set, the new frequency set, and a starting time indicating when to apply the new frequency set. As embodied herein, these messages may be modified to include a power level correction value. As part of the frequency redefinition procedure, the mobile station calculates the nominal output power level using equation [1] above.

The calculation, using the power level correction value, of the output power control level at the new frequency upon a frequency redefinition may be performed either in an appropriate network entity, or in the mobile station itself. If performed by the network, then an absolute power control level is sent to the mobile station. If the calculation is performed in the mobile station, then the network sends the power level correction value itself to the mobile station. Sending of the power level correction value is preferred because the appropriate absolute nominal output power may change (sometimes significantly) between the time the network sends a message containing the command to establish a given output power control level, and the time the output power control level is to be put into effect. In contrast, the required power level correction value remains constant over time.

Preferably, software in the radio resource management entity of the mobile station is programmed to calculate the output power control level at the new frequency using equation [1] above, as well as any band-specific modifications to equation [1], such as those described above for GSM 900/DCS 1800. Similarly, in embodiments of the present invention in which the network sends the power level correction value to the mobile station, the radio resource management entity of the mobile station is preferably programmed to support receiving and processing the power level correction value. Such programming modifications are preferably executed by processor [104] in mobile station [102] for executing radio resource management functions, or by another processor. See Fig. 1. As such programming modifications would be well-understood by one of skill the art, they are not further described herein. It should be noted that embodiments are also possible in which hardware changes replaces the software changes.

Various embodiments within the scope of the present invention are possible. For example, the present invention may be applied to different frequency bands other than those described herein. Additionally, the present invention may be applied in other types of mobile communication systems in which mobile station output power control during frequency redefinition between bands is not fully specified. These and other variations are intended to be part of the present invention, the scope of which is intended to be limited only by the claims appended hereto.

## Claims

**1.** A mobile station (102) associated with a mobile communications network, the mobile station (102) being capable of performing a frequency redefinition from a first frequency group in a first frequency band to a second frequency group in a second frequency band, **characterized in that** the mobile station (102) is adapted to set its nominal output power upon the frequency redefinition by adding a power level correction value to the output power control level at the first frequency group so that the nominal output power at the second frequency group is equal to the nominal output power at the first frequency group.

**2.** The mobile station according to claim 1, **characterized in that** the mobile communications network is a Global System for Mobile Communications GSM communications network, the first frequency band is DCS 1800, the second frequency band is GSM 900, and
when the output power control level at the first frequency group is greater than 28, the mobile station (102) is adapted to set the output power control level at the second frequency group to modulo 32 of the sum of the power level correction value and the output power control level at the first frequency group;
when the output power control level at the first frequency group is less than or equal to 28 and the sum of the power level correction value and the output power control level at the first frequency group is less than or equal to 31, the mobile station (102) is adapted to set the output power control level at the second frequency group to the sum of the power level correction value and the output power control level at the first frequency group; and
when the output power control level at the first frequency group is less than or equal to 28 and the sum of the power level correction value and the output power control level at the first frequency group is greater than 31, the mobile station (102) is adapted to set the output power control level at the second frequency group to 31.

**3.** The mobile station according to claim 1, **characterized in that** the mobile communications network is a Global System for Mobile Communications GSM communications network, the first frequency band is GSM 900, the second frequency band is DCS 1800, and
when the sum of the power level correction value and the output power control level at the first frequency group is greater than or equal to zero, the mobile station (102) is adapted to set the output power control level at the second frequency group to the sum of the power level correction value and the output power control level at the first frequency group;
when the sum of the power level correction value and the output power control level at the first frequency group is less than zero and the sum of the power level correction value, the output power control level at the first frequency group and 32 is greater than or equal to 29, the mobile station (102) is adapted to set the output power control level at the second frequency group to the sum of the power level correction value, the output power control level at the first frequency group, and 32; and
when the sum of the power level correction value and the output power control level at the first frequency group is less than zero and the sum of the power level correction value, the output power control level at the first frequency group and 32 is less than 29, the mobile station (102) is adapted to set the output power control level at the second frequency group to 29.

4. The mobile station according to claim 1, **characterized in that** the power level correction value includes a band offset value.

5. The mobile station according to claim 4, **characterized in that** the mobile station (102) is adapted to determine the band offset value by dividing the nominal output power offset between the first and second frequency bands by the nominal output power difference between consecutive power control levels.

6. The mobile station according to claim 4, **characterized in that** the mobile communications network is a GSM network and the band offset value is 6 or 7.

7. The mobile station according to claim 1, **characterized in that** the power level correction value includes a propagation loss difference value for correcting for the propagation loss difference between the first and second frequency bands.

8. The mobile station according to claim 7, **characterized in that** the mobile station (102) is adapted to determine the propagation loss difference value by dividing the nominal propagation loss difference between the first and second frequency bands by the nominal output power difference between consecutive power control levels.

9. The mobile station according to claim 7, **characterized in that** the mobile communications network is a GSM network and the propagation loss difference value is 5.

10. The mobile station according to claim 1, **characterized in that** the mobile communications network is a GSM network.

11. The mobile station according to claim 1, **characterized in that** the mobile station (102) is adapted to receive the power level correction value from the mobile communications network.

12. The mobile station according to claim 11, **characterized in that** the mobile communications network is a GSM network and the mobile station (102) is adapted to receive the power level correction value in a message directing frequency redefinition for call set-up, a network frequency redefinition, an inter-cell handover, or an intra-cell handover.

13. The mobile station according to claim 1, **characterized in that** the power level correction value resides in the mobile station (102).

14. The mobile station according to claim 1, **characterized in that** the power level correction value is a value sent by the mobile communications network and the mobile station (102) is adapted to use the sent value when the mobile station (102) is designed to receive the sent value, and the mobile station (102) is adapted to use a power level correction value determined in the mobile station (102) when the mobile station (102) is not designed to receive the sent value.

15. The mobile station according to one of claims 1, 2 and 3, **characterized in that** the mobile station (102) includes a processor (104) for performing the adding and/or setting calculations.

16. The mobile station according to claim 11, **characterized in that** the mobile station (102) includes a processor (104) for performing the receiving.

17. A method for performing frequency redefinition from a first frequency group in a first frequency band to a second frequency group in a second frequency band for a mobile station in a mobile communications network,
**characterized in that**
a power level correction value is determined; and
the nominal output power is set upon frequency redefinition by adding the power level correction value to the output power control level at the first frequency group so that the nominal output power at the second frequency group is equal to the nominal output power at the first frequency group.

18. The method according to claim 17, **characterized in that** the power level correction value includes a band offset value and/or a propagation loss difference value for correcting for the propagation loss difference between the first and second frequency bands.

## Patentansprüche

1. Mobilstation (102), die einem Mobilkommunikationsnetz zugeordnet ist, wobei die Mobilstation (102) fähig ist, eine Frequenzneudefinition von einer ersten Frequenzgruppe in einem ersten Frequenzband zu einer zweiten Frequenzgruppe in einem zweiten Frequenzband durchzuführen, **dadurch gekennzeichnet, dass** die Mobilstation (102) so ausgeführt ist, dass sie ihre Nennausgangsleistung nach der Frequenzneudefinition festlegt, indem sie einen Leistungspegelkorrekturwert zu dem Ausgangsleistungssteuerpegel bei der ersten Frequenzgruppe addiert, so dass die Nennausgangsleistung bei der zweiten Frequenzgruppe gleich der Nennausgangsleistung bei der ersten Frequenzgruppe ist.

2. Mobilstation nach Anspruch 1, **dadurch gekennzeichnet, dass** das Mobilkommunikationsnetz ein GSM-Kommunikationsnetz des globalen Systems für mobile Kommunikation ist, das erste Frequenzband DCS 1800 ist, das zweite Frequenzband GSM 900 ist, und
dann, wenn der Ausgangsleistungssteuerpegel bei der ersten Frequenzgruppe größer als 28 ist, die Mobilstation (102) dafür ausgelegt ist, den Ausgangsleistungssteuerpegel bei der zweiten Frequenzgruppe auf modulo 32 der Summe aus dem Leistungspegelkorrekturwert und dem Ausgangsleistungssteuerpegel bei der ersten Frequenzgruppe festzulegen;
dann, wenn der Ausgangsleistungssteuerpegel bei der ersten Frequenzgruppe kleiner oder gleich 28 ist und die Summe aus dem Leistungspegelkorrekturwert und dem Ausgangsleistungssteuerpegel bei der ersten Frequenzgruppe kleiner oder gleich 31 ist, die Mobilstation (102) dafür ausgelegt ist, den Ausgangsleistungssteuerpegel bei der zweiten Frequenzgruppe auf die Summe aus dem Leistungspegelkorrekturwert und dem Ausgangsleistungssteuerpegel bei der ersten Frequenzgruppe festzulegen; und
dann, wenn der Ausgangsleistungssteuerpegel bei der ersten Frequenzgruppe kleiner oder gleich 28 ist und die Summe aus dem Leistungspegelkorrekturwert und dem Ausgangsleistungssteuerpegel bei der ersten Frequenzgruppe größer als 31 ist, die Mobilstation (102) dafür ausgelegt ist, den Ausgangsleistungssteuerpegel bei der zweiten Frequenzgruppe auf 31 festzulegen.

3. Mobilstation nach Anspruch 1, **dadurch gekennzeichnet, dass** das Mobilkommunikationsnetz ein GSM-Kommunikationsnetz des globalen Systems für mobile Kommunikation ist, das erste Frequenzband GSM 900 ist, das zweite Frequenzband DCS 1800 ist, und
dann, wenn die Summe aus dem Leistungspegelkorrekturwert und dem Ausgangsleistungssteuerpegel bei der ersten Frequenzgruppe größer oder gleich 0 ist, die Mobilstation (102) dafür ausgelegt ist, den Ausgangsleistungssteuerpegel bei der zweiten Frequenzgruppe auf die Summe aus dem Leistungspegelkorrekturwert und dem Ausgangsleistungssteuerpegel bei der ersten Frequenzgruppe festzulegen;
dann, wenn die Summe aus dem Leistungspegelkorrekturwert und dem Ausgangsleistungssteuerpegel bei der ersten Frequenzgruppe kleiner als 0 ist und die Summe aus dem Leistungspegelkorrekturwert, dem Ausgangsleistungssteuerpegel bei der ersten Frequenzgruppe und 32 größer oder gleich 29 ist, die Mobilstation (102) dafür ausgelegt ist, den Ausgangsleistungssteuerpegel bei der zweiten Frequenzgruppe auf die Summe aus dem Leistungspegelkorrekturwert, dem Ausgangsleistungssteuerpegel bei der ersten Frequenzgruppe und 32 festzulegen; und
dann, wenn die Summe aus dem Leistungspegelkorrekturwert und dem Ausgangsleistungssteuerpegel bei der ersten Frequenzgruppe kleiner als 0 ist und die Summe aus dem Leistungspegelkorrekturwert, dem Ausgangsleistungssteuerpegel bei der ersten Frequenzgruppe und 32 kleiner als 29 ist, die Mobilstation (102) dafür ausgelegt ist, den Ausgangsleistungssteuerpegel bei der zweiten Frequenzgruppe auf 29 festzulegen.

4. Mobilstation nach Anspruch 1, **dadurch gekennzeichnet, dass** der Leistungspegelkorrekturwert einen Band-Offset-Wert enthält.

5. Mobilstation nach Anspruch 4, **dadurch gekennzeichnet, dass** die Mobilstation (102) so ausgeführt ist, dass sie den Band-Offset-Wert bestimmt, indem sie den Nennausgangsleistungs-Offset zwischen den ersten und zweiten Frequenzbändern durch die Nennausgangsleistungsdifferenz zwischen aufeinanderfolgenden Leistungssteuerpegeln dividiert.

6. Mobilstation nach Anspruch 4, **dadurch gekennzeichnet, dass** das Mobilkommunikationsnetz ein GSM-Netz ist und der Band-Offset-Wert gleich 6 oder 7 ist.

7. Mobilstation nach Anspruch 1, **dadurch gekennzeichnet, dass** der Leistungspegelkorrekturwert einen Ausbreitungsverlustdifferenzwert zum Korrigieren der Ausbreitungsverlustdifferenz zwischen den ersten und zweiten Frequenzbändern enthält.

8. Mobilstation nach Anspruch 7, **dadurch gekennzeichnet, dass** die Mobilstation (102) so ausgeführt ist, dass sie den Ausbreitungsverlustdifferenzwert bestimmt, indem sie die Nennausbreitungsverlustdifferenz zwischen den ersten und zweiten Frequenzbändern durch die Nennausgangsleistungsdifferenz zwischen aufeinanderfolgenden Leistungssteuerpegeln dividiert.

9. Mobilstation nach Anspruch 7, **dadurch gekennzeichnet, dass** das Mobilkommunikationsnetz ein GSM-Netz ist und der Ausbreitungsverlustdifferenzwert gleich 5 ist.

10. Mobilstation nach Anspruch 1, **dadurch gekennzeichnet, dass** das Mobilkommunikationsnetz ein GSM-Netz ist.

11. Mobilstation nach Anspruch 1, **dadurch gekennzeichnet, dass** die Mobilstation (102) so ausgeführt ist, dass sie den Leistungspegelkorrekturwert vom Mobilkommunikationsnetz empfängt.

12. Mobilstation nach Anspruch 11, **dadurch gekennzeichnet, dass** das Mobilkommunikationsnetz ein GSM-Netz ist und die Mobilstation (102) so ausgeführt ist, dass sie den Leistungspegelkorrekturwert in einer Nachricht empfängt, die eine Frequenzneudefinition für einen Rufaufbau, eine Netzfrequenzneudefinition, eine Zwischenzellenübergabe oder eine Intra-Zellen-Übergabe anweist.

13. Mobilstation nach Anspruch 1, **dadurch gekennzeichnet, dass** sich der Leistungspegelkorrekturwert in der Mobilstation (102) befindet.

14. Mobilstation nach Anspruch 1, **dadurch gekennzeichnet, dass** der Leistungspegelkorrekturwert ein Wert ist, der vom Mobilkommunikationsnetz gesendet wird, und dass die Mobilstation (102) so ausgeführt ist, dass sie den gesendeten Wert verwendet, wenn die Mobilstation (102) dafür ausgelegt ist, den gesendeten Wert zu empfangen, und dass die Mobilstation (102) so ausgeführt ist, dass sie einen in der Mobilstation (102) bestimmten Leistungspegelkorrekturwert verwendet, wenn die Mobilstation (102) nicht dafür ausgelegt ist, den gesendeten Wert zu empfangen.

15. Mobilstation nach irgendeinem der Ansprüche 1, 2 oder 3, **dadurch gekennzeichnet, dass** die Mobilstation (102) einen Prozessor (104) zum Durchführen der Additions- und/oder Festlegungsberechnungen enthält.

16. Mobilstation nach Anspruch 11, **dadurch gekennzeichnet, dass** die Mobilstation (102) einen Prozessor (104) zum Durchführen des Empfangens enthält.

17. Verfahren zur Durchführung einer Frequenzneudefinition von einer ersten Frequenzgruppe in einem ersten Frequenzband zu einer zweiten Frequenzgruppe in einem zweiten Frequenzband für eine Mobilstation in einem Mobilkommunikationsnetz,
**dadurch gekennzeichnet, dass**
ein Leistungspegelkorrekturwert bestimmt wird; und
die Nennausgangsleistung nach Frequenzneudefinition festgelegt wird, indem der Leistungspegelkorrekturwert zu dem Ausgangsleistungssteuerpegel bei der ersten Frequenzgruppe addiert wird, so dass die Nennausgangsleistung bei der zweiten Frequenzgruppe gleich der Nennausgangsleistung bei der ersten Frequenzgruppe ist.

18. Verfahren nach Anspruch 17, **dadurch gekennzeichnet, dass** der Leistungspegelkorrekturwert einen Band-Offset-Wert und/oder einen Ausbreitungsverlustdifferenzwert zum Korrigieren der Ausbreitungsverlustdifferenz zwischen den ersten und zweiten Frequenzbändern enthält.

## Revendications

1. Station (102) mobile associée à un réseau de communication mobile, la station (102) mobile étant apte à effectuer une redéfinition de fréquence d'un premier groupe de fréquence dans une première bande de fréquence à un deuxième groupe de fréquence dans une deuxième bande de fréquence, **caractérisée en ce que** la station (102) mobile est conçue pour fixer sa puissance nominale de sortie, après la redéfinition de fréquence, en ajoutant une valeur de correction du niveau de puissance au niveau de commande de la puissance de sortie au premier groupe de fréquence, de sorte que la puissance nominale de sortie au deuxième groupe de fréquence soit égale à la puissance nominale de sortie au premier groupe de fréquence.

2. Station mobile suivant la revendication 1, **caractérisée en ce que** le réseau de communication mobile est un réseau de communication Global System for Mobile Communications GSM, la première bande de fréquence est DCS 1800, la deuxième bande de fréquence est GSM 900, et
lorsque le niveau de commande de puissance de sortie au premier groupe de fréquence est supérieur à 28, la station (102) mobile est conçue pour fixer le niveau de commande de la puissance de sortie au deuxième groupe de fréquence à modulo 32 de la somme de la valeur de correction du niveau de puissance et du niveau de commande de la puissance de sortie au premier groupe de fréquence ;
lorsque le niveau de commande de la puissance de sortie au premier groupe de fréquence est inférieur ou égal à 28 et lorsque la somme de la valeur de correction du niveau de puissance et du niveau de commande de la puissance de sortie au premier groupe de fréquence est inférieure ou égale à 31, la station (102) mobile est conçue pour fixer le niveau de commande de la puissance de sortie au deuxième groupe de fréquence à la somme de la valeur de correction du niveau de puissance et du niveau de commande de la puissance de sortie au premier groupe de fréquence ;
lorsque le niveau de commande de la puissance de sortie au premier groupe de fréquence est inférieur ou égal à 28 et lorsque la somme de la valeur de correction du niveau de puissance et du niveau de commande de la puissance de sortie au premier groupe de fréquence est supérieure à 31, la station (102) mobile est conçue pour fixer le niveau de commande de la puissance de sortie au deuxième groupe de fréquence à 31.

3. Station mobile suivant la revendication 1, **caractérisée en ce que** le réseau de communication mobile est un réseau de communication Global System for Mobile Communications GSM, la première bande de fréquence est GSM 900, la deuxième bande de fréquence est DCS 1800, et
lorsque la somme de la valeur de correction du niveau de puissance et du niveau de commande de la puissance de sortie au premier groupe de fréquence est supérieure ou égale à zéro, la station (102) mobile est conçue pour fixer le niveau de commande de la puissance de sortie au deuxième groupe de fréquence à la somme de la valeur de correction du niveau de puissance et du niveau de commande de la puissance de sortie au premier groupe de fréquence ;
lorsque la somme de la valeur de la correction du niveau de puissance et du niveau de commande de la puissance de sortie au premier groupe de fréquence est inférieure à zéro et lorsque la somme de la valeur de correction du niveau de puissance du niveau de commande de la puissance de sortie au premier groupe de fréquence et de 32 est supérieure ou égale à 29, la station (102) mobile est conçue pour fixer le niveau de commande de la puissance de sortie au deuxième groupe de fréquence à la somme de la valeur de correction du niveau de puissance du niveau de commande de la puissance de sortie au premier groupe de fréquence et de 32 ; et
lorsque la somme de la valeur de correction du niveau de puissance et le niveau de commande de la puissance de sortie au premier groupe de fréquence est inférieure à zéro et lorsque la somme de la valeur de correction du niveau de puissance du niveau de commande de la puissance de la sortie au premier groupe de fréquence et de 32 est inférieure à 29, la station (102) mobile est conçue pour fixer le niveau de commande de la puissance de sortie au deuxième groupe de fréquence à 29.

4. Station suivant la revendication 1, **caractérisée en ce que** la valeur de correction du niveau de puissance comprend une valeur de décalage de bande.

5. Station suivant la revendication 4, **caractérisée en ce que** la station (102) mobile est conçue pour déterminer la valeur de décalage de bande en divisant le décalage de puissance de sortie nominale entre les première et deuxième bandes de fréquence par la différence de puissance de sortie nominale entre des niveaux de commande de puissance consécutifs.

6. Station suivant la revendication 4, **caractérisée en ce que** le réseau de communication mobile est un réseau GSM et la valeur de décalage de bande est de 6 ou de 7.

7. Station suivant la revendication 1, **caractérisée en ce que** la valeur de correction du niveau de puissance comprend une valeur de différence de perte de propagation pour corriger la différence de perte de propagation entre les première et deuxième bandes de fréquence.

8. Station suivant la revendication 7, **caractérisée en ce que** la station (102) mobile est conçue pour déterminer la valeur de différence de perte de propagation en divisant la différence de perte de propagation nominale entre les première et deuxième bandes de fréquence par la différence de puissance de sortie nominale entre des niveaux de commande de puissance consécutifs.

9. Station suivant la revendication 7, **caractérisée en ce que** le réseau de communication mobile est un réseau GSM et la valeur de la différence de perte de propagation est de 5.

10. Station suivant la revendication 1, **caractérisée en ce que** le réseau de communication mobile est un réseau GSM.

11. Station suivant la revendication 1, **caractérisée en ce que** la station (102) mobile est conçue pour recevoir la valeur de correction du niveau de puissance du réseau de communication mobile.

12. Station suivant la revendication 11, **caractérisée en ce que** le réseau de communication mobile est un réseau GSM et la station (102) mobile est conçue pour recevoir la valeur de correction du niveau de puissance en un message imposant une redéfinition de fréquence pour l'établissement d'une communication, pour une redéfinition de la fréquence de réseau, pour une commutation intercellulaire ou pour une commutation intracellulaire.

13. Station suivant la revendication 1, **caractérisée en ce que** la valeur de correction du niveau de puissance se trouve dans la station (102) mobile.

14. Station suivant la revendication 1, **caractérisée en ce que** la valeur de correction du niveau de puissance est une valeur envoyée par le réseau de communication mobile et la station (102) mobile est conçue pour utiliser la valeur envoyée lorsque la station (102) mobile est conçue pour recevoir la valeur envoyée, la station (102) mobile est conçue pour utiliser une valeur de correction du niveau de puissance déterminée par la station (102) mobile lorsque la station (102) mobile n'est pas conçue pour recevoir la valeur envoyée.

15. Station suivant l'une des revendications 1, 2 et 3, **caractérisée en ce que** la station (102) mobile comprend un processeur (104) pour effectuer les calculs d'addition et/ou de réglage.

16. Station suivant la revendication 11, **caractérisée en ce que** la station (102) mobile comprend un processeur (104) pour effectuer la réception.

17. Procédé pour effectuer une redéfinition de fréquence d'un premier groupe de fréquence dans une première bande de fréquence à un deuxième groupe de fréquence dans une deuxième bande de fréquence pour une station mobile dans un réseau de communication mobile,
**caractérisé en ce que**
on détermine une valeur de correction du niveau de puissance ; et
on fixe la puissance de sortie nominale après redéfinition de la fréquence en ajoutant la valeur de correction du niveau de la puissance au niveau de commande de la puissance de sortie au premier groupe de fréquence de sorte que la puissance de sortie nominale au deuxième groupe de fréquence soit égale à la puissance de sortie nominale au premier groupe de fréquence.

18. Procédé suivant la revendication 17, **caractérisé en ce que** la valeur de correction du niveau de la puissance comprend une valeur de décalage de bande et/ou une valeur de différence de perte de propagation pour corriger une différence de perte de propagation entre les première et deuxième bandes de fréquence.

102
104

Fig. 1

Determine a power level correction value

202

Add the power level correction value to the output power control level at the first frequency group so that the nominal output power at the second frequency group is approximately equal to the nominal output power at the first frequency group

204

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5546384 A